(19) Europäisches Patentamt
European Patent Office
Office européen des brevets

(11) EP 2 191 982 B1

(12) # EUROPEAN PATENT SPECIFICATION

(45) Date of publication and mention of the grant of the patent:
**14.12.2011 Bulletin 2011/50**

(51) Int Cl.:
***B60C 1/00*** *(2006.01)* ***B60C 17/06*** *(2006.01)*
***C08K 7/02*** *(2006.01)* ***C08L 7/00*** *(2006.01)*
***C08L 9/00*** *(2006.01)* ***C08L 21/00*** *(2006.01)*

(21) Application number: **09013312.5**

(22) Date of filing: **21.10.2009**

(54) **Tire with a rubber composition for sidewall reinforcing layer or sidewall**

Reifen mit einer Gummizusammensetzung für eine Seitenwandverstärkungsschicht oder eine Seitenwand

Pneu avec une composition de caoutchouc pour couche renforcée latérale ou paroi latérale

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **01.12.2008 JP 2008306176**
**22.12.2008 JP 2008325614**
**05.10.2009 JP 2009231889**

(43) Date of publication of application:
**02.06.2010 Bulletin 2010/22**

(73) Proprietor: **Sumitomo Rubber Industries, Ltd.**
**Kobe-shi, Hyogo 651-0072 (JP)**

(72) Inventor: **Imoto, Yoji**
**Kobe-shi**
**Hyogo 651-0072 (JP)**

(74) Representative: **Manitz, Finsterwald & Partner GbR**
**Postfach 31 02 20**
**80102 München (DE)**

(56) References cited:
**EP-A2- 0 296 396** **EP-A2- 0 577 408**
**WO-A1-2006/106609** **WO-A2-2004/108859**
**JP-A- 11 279 406** **US-A1- 2003 000 619**

Remarks:
The file contains technical information submitted after the application was filed and not included in this specification

EP 2 191 982 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a pneumatic tire, such as a run-flat tire, that is produced using a rubber composition for a sidewall reinforcing layer or a sidewall.

### BACKGROUND ART

Today, run-flat tires, which have a high-strength sidewall reinforcing layer arranged at the inner side of a sidewall portion of the tire, have been put into practical use. When punctured, such run-flat tires can safely run a certain distance by maintaining the rigidity of tires even in the case where the air pressure is lost (i.e., the internal pressure is zero), and further reducing the rubber breakage of tires even in the case of being repeatedly flexed. This eliminates the need to always have a spare tire, and should reduce the total weight of a vehicle. However, there is a limit on the speed and distance in run-flat driving with punctured run-flat tires. Hence, it is desirable to further improve the durability of run-flat tires.
One way of improving the durability of a run-flat tire is to suppress deformation of the tire by thickening the reinforcing layer and thereby to prevent the tire from breaking due to the deformation. However, this increases the weight of the tire, which goes against the reduction of weight that is the original purpose of using run-flat tires.
Another way is to increase the hardness of the reinforcing layer by increasing the amount of a reinforcing filler such as carbon black in a rubber composition forming the layer and thereby to suppress deformation. However, this way puts an increased load on a kneader during processes such as kneading and extrusion, and also leads to high heat build-up with respect to the physical properties of the rubber composition after vulcanization. Thus, there is little hope for improvement of the durability of run-flat tires in this way.
Meanwhile, pneumatic tires other than run-flat tires are also desired to show improved properties such as durability.
Patent Document 1 discloses a run-flat tire that is produced using a rubber composition, which contains acetylene black, a carbon fiber or the like, for the reinforcing rubber layer in the sidewall portion so as to achieve improved productivity. However, the carbon fiber is not examined in detail. Further, there is a potential to improve the low heat build-up property of the sidewall reinforcing layer or the sidewall rubber of the sidewall portion, and the run-flat durability.
Patent Document 2 discloses a studless tire that contains a short fiber precursor of a carbon fiber in the tread and demonstrates excellent performance on ice and snow. However, the sidewall reinforcing layer or sidewall rubber of a run-flat tire is not studied. There is also a potential to improve the above properties.

Patent Document 1: JP 2004-330822 A
Patent Document 2: JP 2004-34743 A
US 2003/0000619 A1 relates to a rubber composite comprising a cobalt-coated carbon fiber and a rubber component comprising e.g. 100 % by weight of natural rubber and 70 phr of carbon black.
WO 2006/106609 A1 discloses an electrically conducting curable resin composition comprising a hydrocarbon compound having a plurality of carbon-carbon double bonds, such as a 1,2-polybutadiene, an elastomer (B) different from (A), such as isoprene rubber, and a carbonaceous material (C), such as a pitch-type fiber.
WO 2004/ 108859 A2 discloses friction material preforms, particularly chopped carbon fiber preforms making use of a coal tar pitch blinder.

### SUMMARY OF THE INVENTION

The present invention aims to solve the problems mentioned earlier and to provide a rubber composition for a sidewall reinforcing layer or a sidewall, which has sufficient thermal conductivity and low heat build-up property as well as excellent rigidity and run-flat durability. The present invention thus aims to provide a pneumatic tire such as a run-flat tire, which has a sidewall reinforcing layer or sidewall that is produced using the rubber composition.
The present invention relates to a a run-flat tire comprising a sidewall reinforcing layer that is produced by using a rubber composition comprising a diene rubber and a coal-pitch based carbon fiber, wherein the diene rubber contains butadiene rubber in an amount of 10 to 80 % by mass per 100 % by mass of the diene rubber, and wherein the amount of the coal-pitch based carbon fiber is 1 to 50 parts by mass per 100 parts by mass of the diene rubber.
Preferably, the diene rubber of the run-flat tire contains natural rubber and/or epoxidized natural rubber in an amount of 10 to 80 % by mass per 100 % by mass of the diene rubber.
The coal-pitch based carbon fiber preferably has an average fiber diameter of 1 to 80 $\mu$m and an average fiber length of 0.1 to 30 mm.
The rubber composition of the run-flat tire preferably has a complex modulus E* of 5 MPa or higher, and a breaking energy (TB $\times$ EB/2) of 500 or more, the TB referring to the tensile strength at break, and the EB referring to

the elongation at break. Further, the rubber composition preferably has a thermal conductivity of 0. 3 to 5 W/m·K.

Moreover, the rubber composition of the run-flat tire may further comprise carbon black, silica or an alkylphenol-sulfur chloride condensate.

The present invention also relates to a pneumatic tire comprising a sidewall that is produced by using a rubber composition comprising a diene rubber and a coal-pitch based carbon fiber, wherein the diene rubber contains butadiene rubber in an amount of 10 to 80 % by mass per 100 % by mass of the diene rubber, and wherein the amount of the coal-pitch based carbon fiber is 1 to 50 parts by mass per 100 parts by mass of the diene rubber.

Since the present invention provides a tire comprising a rubber composition for a sidewall reinforcing layer which contains a diene rubber and a coal-pitch based carbon fiber, it is possible to provide a run-flat tire that has excellent thermal conductivity and low heat build-up property as well as excellent rigidity and run-flat durability. Further, use of the rubber composition as a rubber composition for a sidewall can achieve excellent thermal conductivity, low heat build-up property, rigidity, and durability.

BEST MODE FOR CARRYING OUT THE INVENTION

The rubber composition of the tire of the present invention contains a diene rubber and a coal-pitch based carbon fiber. Use of a coal-pitch based carbon fiber for a reinforcing rubber layer (sidewall reinforcing layer) in a sidewall portion of a run-flat tire makes it possible to provide high thermal conductivity and low heat build-up property to the tire, and to improve the rigidity and thermal resistance of the vulcanized rubber composition of the tire so as to produce a run-flat tire that has excellent rigidity and run-flat durability. Further, use of the rubber composition of the present invention with the same ingredients contained therein for a sidewall rubber of a sidewall portion also makes it possible to achieve excellent thermal conductivity, low heat build-up property, rigidity, and durability.

The rubber composition contained in the tire according to the present invention contains 10 to 80 % by man butadiene rubber per 100 % by man of the diene rubber. Examples of the further diene rubber include natural rubber (NR) , epoxidized natural rubber (ENR), styrene-butadiene rubber (SBR), isoprene rubber (IR), butyl rubber (IIR), acrylonitrile-butadiene rubber (NBR), chloroprene rubber (CR), styrene-isoprene-butadiene rubber (SIBR), styrene-isoprene rubber, and isoprene-butadiene rubber. Each of these may be used alone or two or more kinds of these may be used in combination. Among these, NR, IR, and SBR are preferably used, and SBR is more preferably used, because excellent low heat build-up property and run-flat durability can be achieved. Further, a combination of SBR, and NR and/or IR is still more preferable. Particularly, modified SBR and modified BR are desirable.

Examples of the modified SBR include SBR modified with a compound that is represented by the following Formula (1).

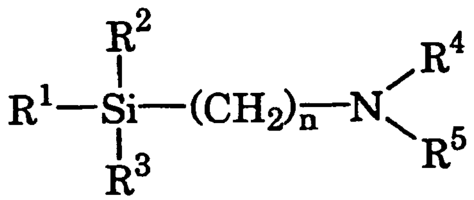

(1)

In the formula, $R^1$, $R^2$, and $R^3$ are the same or different, and each of these represents an alkyl group, an alkoxy group, a silyloxy group, an acetal group, a carboxyl group, a mercapto group, or a derivative thereof. $R^4$ and $R^5$ are the same or different, and each of these represents a hydrogen atom or an alkyl group. "n" represents an integer.

Examples of a commercially available product of the SBR modified with a compound represented by Formula (1) include E15 produced by Asahi Kasei Chemicals Corporation.

Examples of the modified BR also include BR modified with a compound represented by Formula 1. As a commercially available product thereof, there is a modified butadiene rubber (vinyl content: 15% by mass; $R^1$, $R^2$, and $R^3$ = $-OCH_3$; $R^4$ and $R^5$ = $-CH_2CH_3$; n = 3) that is produced by Sumitomo Chemical Co., Ltd.

The vinyl content of the modified butadiene rubber is preferably 35% by mass or less, more preferably 25% by mass or less, and still more preferably 20% by mass or less. A vinyl content of more than 35% by mass tends to impair the low heat build-up property. The lower limit of the vinyl content is not particularly limited.

The vinyl content (1,2-bond butadiene unit content) can be determined by infrared absorption spectrum analysis.

The NR is not particularly limited, and for example, NR generally used in the tire industries, such as SIR20, RSS#3, and TSR20, may be used. As the IR, IR generally used may be used. The BR is not particularly limited, and for example, BR with a high cis content, or BR that contains a syndiotactic polybutadiene crystal may be used. Examples

of the SBR include, but are not particularly limited to, SBR produced by solution polymerization, and SBR produced by emulsion polymerization.

If the diene rubber contains NR and/or IR, the amount of NR and/or IR in 100% by mass of the diene rubber is preferably 10% by mass or more, more preferably 20% by mass or more, and still more preferably 30% by mass or more. An amount of less than 10% by mass tends to decrease the rubber strength. The amount of NR and/or IR in 100% by mass of the diene rubber is preferably 80% by mass or less, more preferably 70% by mass or less, and still more preferably 60% by mass or less. An amount of more than 80% by mass tends not to achieve sufficient thermal resistance and hardness, resulting in decreased durability.

As used herein, the amount of NR and/or IR means the total amount of the two ingredients.

According to the present invention, the amount of BR in 100% by mass of the diene rubber is 10% by mass or more, preferably 20% by mass or more, and still more preferably 30% by mass or more. An amount of less than 10% by mass tends not to achieve sufficient low heat build-up property. The amount of BR in 100% by mass of the diene rubber is 80% by mass or less, preferably 60% by mass or less, and still more preferably 50% by mass or less. An amount of more than 80% by mass tends to decrease the rubber strength.

If the diene rubber contains SBR, the amount of SBR in 100% by mass of the diene rubber is preferably 10% by mass or more, more preferably 20% by mass or more, and still more preferably 30% by mass or more. An amount of less than 10% by mass may result in insufficient low heat build-up property of the vulcanized rubber composition and in insufficient elongation (EB) of the vulcanized rubber composition, which may also deteriorate the thermal resistance. Further, although the amount of SBR can be 100% by mass, the rubber composition in this case may peel off during the processes due to insufficient adhesion and may exhibit significantly decreased elongation (EB) after vulcanization. Therefore, the amount of SBR in 100% by mass of the diene rubber is preferably 80% by mass or less, more preferably 70% by mass or less, and still more preferably 60% by mass or less.

In the present invention, a coal-pitch based carbon fiber is used. Blending a coal-pitch based carbon fiber in the reinforcing rubber layer in the sidewall portion can lead to production of a run-flat tire that is excellent in the thermal conductivity, low heat build-up property, rigidity, and durability. Further, blending a coal-pitch based carbon fiber in the sidewall rubber of the sidewall portion can also lead to improvement of those properties. Generally, in the reinforcing rubber layer and the sidewall rubber, temperature increases are concentrated in certain limited spots. This causes the vulcanized rubber composition to break. In the present invention, it is assumed that excellent low heat build-up property and durability such as run-flat durability are achieved as follow. The coal-pitch based carbon fiber contributes to an increase in the thermal conductivity, which allows heat to spread over the whole of the vulcanized rubber composition. The spread of heat makes it possible to suppress the temperature increase and thus prevent the vulcanized rubber composition from breaking.

The coal-pitch based carbon fiber preferably has an average fiber diameter of 1 to 80 $\mu$m in terms of dispersion in the rubber composition, and improvement of the thermal conductivity. The lower limit of the average fiber diameter is more preferably 3 $\mu$m or larger, and still more preferably 5 $\mu$m or larger. Further, the upper limit of the average fiber diameter is more preferably 30 $\mu$m or smaller, and still more preferably 20 $\mu$m or smaller.

Meanwhile, the coal-pitch based carbon fiber preferably has an average fiber length of 0.1 to 30 mm in terms of dispersion in the rubber composition, and improvement of the thermal conductivity. The lower limit of the average fiber length is more preferably 1 mm or longer, and still more preferably 4 mm or longer. The upper limit of the average fiber length is more preferably 15 mm or shorter, and still more preferably 10 mm or shorter.

The average fiber diameter and the average fiber length can be measured, for example, by observing the fiber with an electron microscope.

The coal-pitch based carbon fiber in the present invention is not particularly limited. For example, a coal-pitch based carbon fiber may be suitably used which can be produced by the production method described in JP H07-331536 A. More specifically, the coal-pitch based carbon fiber can be produced by making a pitch fiber infusible according to a usual method; carbonizing and/or graphitizing the pitch fiber at a desired temperature so as to produce a "carbon fiber as a raw material"; and putting the "carbon fiber as a raw material" together with previously graphitized packing cokes into a graphite crucible to perform graphitization.

Examples of the pitch fiber (spinning pitch) to be used in the above method include pitch fibers that can be produced by spinning with the use of carbonaceous materials (suitable materials have an optical anisotropic content of 40% or more, preferably 70% or more, and still more preferably 90% or more.) such as a coal tar, a coal tar pitch, and a coal liquid which are derived from coal. Also, the "carbon fiber as a raw material" may be impregnated with a sizing agent (such as an epoxy compound or a water-soluble polyamide compound).

By the above method, it is possible to produce a coal-pitch based carbon fiber that has a thermal conductivity of 130 to 1500 W/m·K along the fiber axis; an elastic modulus in tension of 85 ton/mm$^2$ or higher; a compressive strength of 35 kg/mm$^2$ or higher; a thickness of laminated graphite crystals (Lc) of 30 to 50 nm; an La/Lc ratio of 1.5 or more, which is a ratio of a spreading length (La) of the graphite crystals in the layer plane direction to Lc; and a cross-sectional domain size of 500 nm or smaller in the fiber axis direction. Such a coal-pitch based carbon fiber can be suitably used

in the present invention. Here, the thermal conductivity, the elastic modulus in tension, the compressive strength, Lc, La, the domain size, and the optical anisotropic content can be determined by the methods described in the above publication.

Since the raw materials of the coal-pitch based carbon fiber produced by the above method include liquid crystals (mesophases) in which the molecular orientation is controlled to one direction, and like materials, the degree of crystallinity is very high and the elastic modulus and thermal conductivity are also high. The coal-pitch based carbon fiber in the present invention preferably has a structure in which polycyclic aromatic molecular frameworks are accumulated in layers. Examples of a commercially available product of the coal-pitch based carbon fiber include "K6371T" produced by Mitsubishi Plastics, Inc.

The amount of the coal-pitch based carbon fiber per 100 parts by mass of the diene rubber is 1 part by mass or more, preferably 5 parts by mass or more, and still more preferably 10 parts by mass or more. An amount of less than 1 part by mass may not lead to achievement of the effects attributed to the addition. The amount thereof per 100 parts by mass of the diene rubber is 50 parts by mass or less, preferably 40 parts by mass or less, and still more preferably 30 parts by mass or less. An amount of more than 50 parts by mass tends to deteriorate tan $\delta$.

The rubber composition of the present invention may optionally contain compounding ingredients conventionally used in the rubber industries, in addition to the ingredients described above. Examples of the compounding ingredients include fillers such as carbon black and silica; stearic acid; zinc oxide; various age resistors; waxes; vulcanizing agents such as sulfur and sulfur compounds; vulcanization accelerators; and auxiliary vulcanization accelerators.

The carbon black is not particularly limited, and examples thereof include FEF, GPF, HAF, ISAF, and SAF. Carbon black contributes to an increase in the rubber strength.

The nitrogen adsorption specific surface area ($N_2SA$) of the carbon black is preferably 30 $m^2/g$ or larger, and more preferably 35 $m^2/g$ or larger, in that sufficient reinforcement and sufficient durability can be achieved. The $N_2SA$ of the carbon black is preferably 100 $m^2/g$ or smaller, more preferably 80 $m^2/g$ or smaller, and still more preferably 60 $m^2/g$ or smaller, in terms of excellent low heat build-up property.
The $N_2SA$ of the carbon black is determined in accordance with the method A in JIS K6217.

The dibutylphthalate (DBP) oil absorption of the carbon black is preferably 50 ml/100 g or more, and more preferably 80 ml/100 g or more, in that sufficient reinforcement can be achieved. The DBP oil absorption of the carbon black is preferably 300 ml/100 g or less, and more preferably 200 ml/100 g or less, in terms of excellent fatigue resistance properties such as elongation at break.
The DBP oil absorption of the carbon black is determined in accordance with the measuring method described in JIS K6217-4.

The amount of the carbon black per 100 parts by mass of the diene rubber is preferably 5 parts by mass or more, and more preferably 15 parts by mass or more because sufficient rubber strength can be achieved. The amount of the carbon black per 100 parts by mass of the diene rubber is preferably 50 parts by mass or less, and more preferably 40 parts by mass or less because appropriate viscosity can be maintained in the kneading process and excellent processability can be achieved.

Examples of the silica include, but are not particularly limited to, dry silica (silicic anhydride) and wet silica (hydrous silicic acid). However, wet silica is preferable because it contains a larger number of silanol groups. Blending silica makes it possible to improve the tensile strength at break and to decrease tan $\delta$.

The nitrogen adsorption specific surface area ($N_2SA$) of the silica is preferably 50 $m^2/g$ or larger, and more preferably 80 $m^2/g$ or larger. An $N_2SA$ of the silica of smaller than 50 $m^2/g$ tends to decrease the tensile strength at break. The $N_2SA$ of the silica is preferably 220 $m^2/g$ or smaller. An $N_2SA$ of the silica of larger than 220 $m^2/g$ tends to impair the low heat build-up property.
Here, the nitrogen adsorption specific surface area of the silica is a value determined by the BET method in accordance with ASTM D3037-81.

The amount of the silica per 100 parts by mass of the diene rubber is preferably 3 parts by mass or more, more preferably 5 parts by mass or more, and still more preferably 10 parts by mass or more. An amount of less than 3 parts by mass may not lead to achievement of sufficient effects attributed to blending of silica, and thus may decrease the tensile strength at break and the run-flat durability. The amount of the silica per 100 parts by mass of the diene rubber is preferably 50 parts by mass or less, more preferably 30 parts by mass or less, and still more preferably 25 parts by mass or less. An amount of more than 50 parts by mass tends to deteriorate the low heat build-up property.

Examples of the vulcanization accelerator include N-tert-butyl-2-benzothiazolyl sulfenamide (TBBS), N-cyclohexyl-2-benzothiazolyl sulfenamide (CBS), N,N'-dicyclohexyl-2-benzothiazolyl sulfenamide (DZ), mercaptobenzothiazole (MBT), dibenzothiazolyl disulfide (MBTS), and diphenyl guanidine (DPG). Preferable among these are sulfenamide type vulcanization accelerators such as TBBS, CBS and DZ, and particularly preferable is TBBS, in terms of excellent vulcanization characteristics, sufficient low heat build-up property after vulcanization, and sufficient run-flat durability.

As the auxiliary vulcanization accelerator, an alkylphenol-sulfur chloride condensate can be suitably used. Addition of the condensate makes it possible to produce a vulcanized rubber composition with high hardness. Examples

of the alkylphenol-sulfur chloride condensate include a compound represented by the following formula:

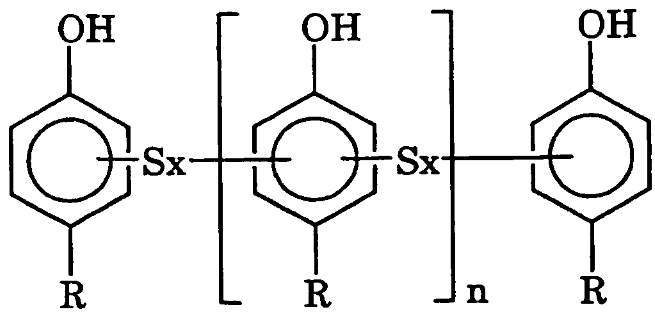

wherein "n" represents 0 or an integer from 1 to 10; X represents an integer from 2 to 4; and R represents a $C_5$-$C_{12}$ alkyl group.

In terms of good dispersibility of the alkylphenol-sulfur chloride condensate in the rubber composition, "n" preferably represents an integer from 1 to 9. Further, in terms of efficient achievement of high hardness, X preferably represents an integer from 2 to 4, and more preferably represents 2. A value of X of more than 4 tends to make the condensate thermally unstable, and a value of X of 1 results in a small sulfur content (weight of sulfur) in the alkylphenol-sulfur chloride condensate. In terms of good dispersibility of the condensate in the rubber composition, R preferably represents a $C_5$-$C_{12}$ alkyl group, and more preferably represents a $C_6$-$C_9$ alkyl group. Specific examples of the alkylphenol-sulfur chloride condensate include Tackirol V200 (produced by Taoka Chemical Co., Ltd.) in which n is 0 to 10, X is 2, R is an alkyl group $C_8H_{17}$, and the sulfur content is 24% by mass.

The rubber composition of the present invention can be produced by a usual method. That is, the respective ingredients described above are mixed by a Banbury mixer, a kneader, or an open roll mill, and are then vulcanized, so that the rubber composition can be produced.

The rubber composition of the present invention is to be used for a reinforcing rubber layer (sidewall reinforcing layer) in a sidewall portion of a run-flat tire. The existence of a reinforcing rubber layer makes it possible for the tire to support the vehicle even when the air pressure is lost, and to have excellent run-flat durability. Also, the rubber composition of the present invention is to be used for a sidewall rubber of a sidewall portion. As used herein, the reinforcing rubber layer in a sidewall portion refers to a lining strip layer that is arranged at the inner side of a sidewall portion of a run-flat tire. The sidewall rubber of a sidewall portion refers to a rubber composition that is arranged on the outer side of the carcass in the direction of the tire axis. Specific examples of the reinforcing rubber layer and the sidewall rubber include, respectively, the reinforcing rubber layer (the reinforcing rubber layer is arranged on the inner side of the carcass ply between the bead portion and the shoulder portion, and has a crescent-shaped cross section that is gradually thinner toward its ends than in the middle.) and the sidewall rubber each of which is shown in drawings of JP 2004-330822 A.

The rubber composition (after vulcanization) of the present invention preferably has a complex modulus E* of 5 MPa or higher. Further, the rubber composition (after vulcanization) preferably has a breaking energy ($TB \times EB/2$) of 500 [MPa·%] or more (as used herein, the TB refers to the tensile strength at break, and the EB refers to the elongation at break.). A rubber composition (after vulcanization) with such properties can achieve high rigidity and excellent run-flat durability. Furthermore, the rubber composition (after vulcanization) preferably has a thermal conductivity of 0.3 to 5 W/m·K. A rubber composition (after vulcanization) with such a high thermal conductivity can have sufficient low heat build-up property.

The values of E*, ($TB \times EB/2$), and thermal conductivity can be determined by the methods described in the below-mentioned Examples.

The pneumatic tire such as a run-flat tire of the present invention can be produced by a usual method with use of the above rubber composition. More specifically, the rubber composition with the compounding ingredients optionally blended therein is, before vulcanization, extruded and processed into a shape of a reinforcing rubber layer (sidewall reinforcing layer) in a sidewall portion of a tire or into a shape of a sidewall rubber of a sidewall portion of a tire, and then assembled with other tire components and molded in a usual manner on a tire building machine to obtain an unvulcanized tire. The unvulcanized tire is then subjected to heating and pressing in a vulcanizer, and thereby a pneumatic tire such as a run-flat tire can be produced.

EXAMPLES

The present invention will be more specifically described based on Examples. However, the present invention

is not limited thereto.

(Ingredients)

Natural rubber (NR): RSS#3
Styrene-butadiene rubber (SBR): SBR1502 produced by Sumitomo Chemical Co., Ltd.
Butadiene rubber (BR) : BR150B produced by Ube Industries, Ltd.
Carbon black: DIABLACK E (FEF, $N_2SA$: 41 $m^2/g$, DBP oil absorption: 115 ml/100 g) produced by Mitsubishi Chemical Corporation
Silica: Ultrasil VN3 ($N_2SA$: 152 $m^2/g$) produced by Degussa AG
Coal-pitch based carbon fiber: K6371T (chopped fiber, average fiber diameter: 11 μm, average fiber length: 6.3 mm, thermal conductivity: 140 W/m·K) produced by Mitsubishi Plastics, Inc.
PAN based carbon fiber: TORAYCA T300 produced by Toray Industries, Inc.
Age resistor 6C: Antigene 6C
(N-(1,3-dimethylbutyl)-N'-phenyl-p-phenylenediamine) produced by Sumitomo Chemical Co., Ltd.
Age resistor FR: Antigene FR (a purified reaction product of amine and ketone that has no residual amine, a quinoline type age resistor) produced by Sumitomo Chemical Co., Ltd.
Zinc oxide: Zinc oxide #2 produced by Mitsui Mining & Smelting Co., Ltd.
Stearic acid: "Tsubaki" produced by NOF Corporation Sulfur: sulfur powder produced by Karuizawa Iou K.K.
Vulcanization accelerator: NOCCELER NS (N-tert-butyl-2-benzothiazolyl sulfenamide) produced by Ouchi Shinko Chemical Industrial Co., Ltd.
Auxiliary vulcanization accelerator: Tackirol V200 produced by Taoka Chemical Co., Ltd.

Examples 1 to 7 and Comparative Examples 1 to 7

According to each formulation shown in Table 1 and Table 2, a Banbury mixer was charged with the chemical agents other than the sulfur, the vulcanization accelerator, and the auxiliary vulcanization accelerator. Next, the mixture was kneaded for four minutes at 150°C so as to produce a kneaded mixture. Thereafter, the sulfur, the vulcanization accelerator, and the auxiliary vulcanization accelerator were added to the kneaded mixture obtained, and they were kneaded for three minutes at 80°C by using an open roll mill so that an unvulcanized rubber composition was produced. Further, the produced unvulcanized rubber composition was press-vulcanized for 20 minutes at 160°C. Thereby, each vulcanized rubber composition was produced (Examples 1 to 4 and Comparative Examples 1 to 4: rubber compositions for a sidewall reinforcing layer, Examples 5 to 7 and Comparative Examples 5 to 7: rubber compositions for a sidewall).
The unvulcanized rubber compositions produced in respective Examples 1 to 4 and Comparative Examples 1 to 4 were each molded into a shape of a reinforcing rubber layer (lining strip layer) in a sidewall portion of a tire. Then, the unvulcanized rubber composition as a sidewall reinforcing rubber layer was assembled together with other tire components to form an unvulcanized tire. The unvulcanized tire was press-vulcanized for 120 minutes at 160°C, so that each test run-flat tire (size: 215/45ZR17) was produced.
The unvulcanized rubber compositions produced in respective Examples 5 to 7 and Comparative Examples 5 to 7 were each molded into a shape of a sidewall rubber of a tire. Then, the unvulcanized rubber composition as a sidewall rubber of a sidewall portion was assembled together with other tire components to form an unvulcanized tire. The unvulcanized tire was press-vulcanized for 120 minutes at 160°C, so that each test run-flat tire (size: 215/45ZR17) was produced.
The produced vulcanized rubber compositions and the test run-flat tires were each evaluated as follow. Table 1 and 2 show the evaluation results.

(Viscoelasticity Test)

The complex modulus (E*) and loss tangent (tan δ) were determined with a viscoelasticity spectrometer produced by Iwamoto Seisakusho Co., Ltd. under the following conditions: a measurement temperature of 50°C; an initial strain of 10%; a dynamic strain of ±2%; and a frequency of 10 Hz. The measured values E* and tan δ were expressed as indices based on the respective values in Comparative Example 1 or 5 each being regarded as 100 (reference value). The larger index of E* indicates the higher rigidity, which is preferable. Also, the larger index of tan δ indicates the higher tendency of heat build-up, which is not preferable.

(Tensile Test)

In accordance with JIS K6251 "Rubber, vulcanized or thermoplastic - Determination of tensile stress-strain

properties", a No. 3 dumbbell-shaped sample prepared from each of the vulcanized rubber compositions was subjected to a tensile test. The tensile strength at break (TB) and the elongation at break (EB) were determined so as to calculate the breaking energy (TB × EB/2). The calculated value of breaking energy of each sample was expressed as a strength index based on the value in Comparative Example 1 or 5 being regarded as a strength index of 100. The index was calculated from the following calculation formula. The larger strength index indicates the higher mechanical strength.

$$(\text{Strength index}) = (\text{Breaking energy of each sample}) / (\text{Breaking energy in Comparative Example 1 or 5}) \times 100$$

(Thermal conductivity)

The thermal conductivity (W/m·K) of a sample (100 mm (length) × 50 mm (width) × 10 mm (thickness), homogeneous, smooth measuring surface) prepared from each of the vulcanized rubber compositions was determined with a thermal conductivity meter (produced by Kyoto Electronics Manufacturing Co., Ltd.) under the conditions of a measurement temperature of 25°C and a measurement time of 60 seconds. The determined value of thermal conductivity was expressed as an index based on the value in Comparative Example 1 or 5 being regarded as a thermal conductivity index of 100. The larger index indicates the higher thermal conductivity.

(Run-flat durability)

The produced test run-flat tire with an internal air pressure of 0 kPa was run on a drum at 80 km/h in order to determine the running distance until the tire breaks. The running distance of the test run-flat tire produced using each of the rubber compositions was expressed as a run-flat durability index based on the running distance in Comparative Example 1 or 5 being regarded as a run-flat durability index of 100. The index was calculated from the following calculation formula. The larger index of run-flat durability indicates the higher run-flat durability.

$$(\text{Run-flat durability index}) = (\text{Running distance of each test run-flat tire}) / (\text{Running distance in Comparative Example 1 or 5}) \times 100$$

[Table 1]

Rubber compositions for sidewall reinforcing layer

| | | | Examples | | | | Comparative Examples | | | |
|---|---|---|---|---|---|---|---|---|---|---|
| | | | 1 | 2 | 3 | 4 | 1 | 2 | 3 | 4 |
| Formulation (part(s) by mass) | NR | | 20 | 20 | 20 | 20 | 20 | 20 | 20 | 20 |
| | SBR | | 40 | 40 | 40 | 40 | 40 | 40 | 40 | 40 |
| | BR | | 40 | 40 | 40 | 40 | 40 | 40 | 40 | 40 |
| | Carbon black | | 40 | 35 | 20 | — | 40 | 40 | 35 | 20 |
| | Silica | | 20 | 20 | 20 | — | 20 | 20 | 20 | 20 |
| | Coal-pitch based carbon fiber | | 10 | 10 | 10 | 40 | — | — | — | — |
| | PAN based carbon fiber | | — | — | — | — | — | 10 | — | — |
| | Age resistor 6C | | 1.5 | 1.5 | 1.5 | 1.5 | 1.5 | 1.5 | 1.5 | 1.5 |
| | Zinc oxide | | 3 | 3 | 3 | 3 | 3 | 3 | 3 | 3 |
| | Stearic acid | | 1 | 1 | 1 | 1 | 1 | 1 | 1 | 1 |
| | Age resistor FR | | 1 | 1 | 1 | 1 | 1 | 1 | 1 | 1 |
| | Sulfur | | 5 | 5 | 5 | 5 | 5 | 5 | 5 | 5 |
| | Vulcanization accelerator | | 2 | 2 | 2 | 2 | 2 | 2 | 2 | 2 |
| | Auxiliary vulcanization accelerator | | 2 | 2 | 2 | 2 | 2 | 2 | 2 | 2 |
| Evaluation result | E* | (index) | 127 | 118 | 113 | 119 | 100 | 107 | 97 | 89 |
| | | (MPa) | 8.5 | 7.9 | 7.6 | 8.0 | 6.7 | 7.2 | 6.5 | 6.0 |
| | tan δ (50°C) | (index) | 101 | 98 | 102 | 125 | 100 | 103 | 95 | 96 |
| | | Measurement value | 0.075 | 0.0735 | 0.0765 | 0.093 | 0.075 | 0.077 | 0.071 | 0.072 |
| | TB×EB/2 (150°C) | (index) | 124 | 120 | 131 | 110 | 100 | 102 | 94 | 89 |
| | | (MPa·%) | 1473 | 1426 | 1556 | 1306 | 1188 | 1212 | 1117 | 1057 |
| | Thermal conductivity | (index) | 312 | 298 | 344 | 357 | 100 | 140 | 96 | 92 |
| | | (W/m·K) | 0.905 | 0.864 | 0.998 | 1.035 | 0.29 | 0.406 | 0.278 | 0.267 |
| | Run-flat durability | | 124 | 119 | 123 | 104 | 100 | 103 | 84 | 75 |

The rubber compositions for a sidewall reinforcing rubber layer produced in Examples 1 to 4, which contained NR, SBR and BR as the rubber component and further contained a coal-pitch based carbon fiber, exhibited high thermal conductivity, sufficient low heat build-up property, excellent rigidity, excellent breaking strength, and excellent run-flat durability. On the other hand, the rubber compositions of Comparative Examples 1 to 4, which did not contain a coal-pitch based carbon fiber or contained a PAN based carbon fiber as a substitution for a coal-pitch based carbon fiber, were generally inferior in those properties.

[Table 2]

Rubber compositions for sidewall

| | | | Examples | | | Comparative Examples | | |
|---|---|---|---|---|---|---|---|---|
| | | | 5 | 6 | 7 | 5 | 6 | 7 |
| Formulation (part(s) by mass) | NR | | 50 | 50 | 50 | 50 | 50 | 50 |
| | BR | | 50 | 50 | 50 | 50 | 50 | 50 |
| | Carbon black | | 20 | 20 | 15 | 20 | 20 | 15 |
| | Silica | | 5 | 5 | 5 | 5 | 5 | 5 |
| | Coal-pitch based carbon fiber | | 10 | 20 | 20 | — | — | — |
| | PAN based carbon fiber | | — | — | — | — | 20 | 20 |
| | Age resistor 6C | | 1.5 | 1.5 | 1.5 | 1.5 | 1.5 | 1.5 |
| | Zinc oxide | | 3 | 3 | 3 | 3 | 3 | 3 |
| | Stearic acid | | 1 | 1 | 1 | 1 | 1 | 1 |
| | Age resistor FR | | 1 | 1 | 1 | 1 | 1 | 1 |
| | Sulfur | | 5 | 5 | 5 | 5 | 5 | 5 |
| | Vulcanization accelerator | | 2 | 2 | 2 | 2 | 2 | 2 |
| | Auxiliary vulcanization accelerator | | 2 | 2 | 2 | 2 | 2 | 2 |
| Evaluation result | E* | (index) | 380 | 420 | 355 | 100 | 110 | 98 |
| | | (MPa) | 20.52 | 22.68 | 19.17 | 5.4 | 5.94 | 5.29 |
| | tan δ (50°C) | (index) | 101 | 106 | 94 | 100 | 103 | 95 |
| | | Measurement value | 0.065 | 0.0689 | 0.0611 | 0.065 | 0.067 | 0.062 |
| | TB×EB/2 (150°C) | (index) | 124 | 120 | 131 | 100 | 102 | 94 |
| | | (MPa·%) | 1612 | 1560 | 1703 | 1300 | 1326 | 1222 |
| | Thermal conductivity | (index) | 290 | 340 | 300 | 100 | 140 | 96 |
| | | (W/m·K) | 0.812 | 0.952 | 0.84 | 0.28 | 0.392 | 0.2688 |
| | Run-flat durability | | 124 | 125 | 130 | 100 | 103 | 84 |

The rubber compositions for a sidewall rubber produced in Examples 5 to 7, which contained NR and BR as the rubber component and further contained a coal-pitch based carbon fiber, were also excellent in the above-mentioned properties. On the other hand, the rubber compositions of Comparative Examples 5 to 7, which did not contain a coal-pitch based carbon fiber or contained a PAN based carbon fiber as a substitution for a coal-pitch based carbon fiber, were inferior in the above-mentioned properties.

## Claims

1. A run-flat tire comprising
   a sidewall reinforcing layer that is produced by using a rubber composition comprising
   a diene rubber and a coal-pitch based carbon fiber, wherein the diene rubber contains butadiene rubber in an amount of 10 to 80 % by mass per 100 % by mass of the diene rubber, and
   wherein the amount of the coal-pitch based carbon fiber is 1 to 50 parts by mass per 100 parts by mass of the diene rubber.

2. The run-flat tire according to claim 1, wherein the diene rubber contains natural rubber and/or epoxidized natural rubber in an amount of 10 to 80 % by mass per 100 % by mass of the diene rubber.

3. The run-flat tire according to claim 1, wherein the coal-pitch based carbon fiber has an average fiber diameter of 1 to 80 μm and an average fiber length of 0.1 to 30 mm.

4. The run-flat tire according to claim 1, having a complex modulus E* of 5 MPa or higher, and a breaking energy (TB × EB/2) of 500 or more, the TB referring to the tensile strength at break, and the EB referring to the elongation at break.

5. The run-flat tire according to claim 1, having a thermal conductivity of 0.3 to 5 W/m·K.

6. The run-flat tire according to claim 1, wherein the rubber composition further comprises carbon black.

7. The run-flat tire according to claim 1, wherein the rubber composition further comprises silica.

8. The run-flat tire according to claim 1, wherein the rubber composition further comprises an alkylphenol-sulfur chloride condensate.

9. A pneumatic tire comprising a sidewall that is produced by using a rubber composition comprising a diene rubber and a coal-pitch based carbon fiber, wherein the diene rubber contains butadiene rubber in an amount of 10 to 80 % by mass per 100 % by mass of the diene rubber, and wherein the amount of the coal-pitch based carbon fiber is 1 to 50 parts by mass per 100 parts by mass of the diene rubber.

**Patentansprüche**

1. Notlaufreifen umfassend eine Seitenwandverstärkungsschicht, welche hergestellt unter Verwendung einer Kautschukzusammensetzung worden ist, welche enthält:

   einen Dienekautschuk sowie Carbonfasern auf Basis von Kohle-Pech, wobei der Dienekautschuk Butadienekautschuk in einer Menge zwischen 10 und 80 Massen-% pro 100 Massen-% des Dienekautschuks enthält und wobei die Menge der Carbonfasern auf Basis von Kohle-Pech 1 bis 50 Massenteile pro 100 Massenteile des Dienekautschuks beträgt.

2. Notlaufreifen nach Anspruch 1, wobei der Dienekautschuk Naturkautschuk und/oder epoxidierten Naturkautschuk in einer Menge zwischen 10 und 80 Massen-% pro 100 Massen-% des Dienekautschuks enthält.

3. Notlaufreifen nach Anspruch 1, wobei die Carbonfasern auf Basis von Kohle-Pech einen durchschnittlichen Faserdurchmesser von 1 bis 80 μm und eine durchschnittliche Faserlänge zwischen 0,1 und 30 mm aufweisen.

4. Notlaufreifen nach Anspruch 1 mit einem Komplexmodul E* von 5 MPa oder höher und einer Bremsenergie (TB x EB/2) von 500 oder mehr, wobei die TB die Zugfestigkeit bezeichnet und die EB die Bruchdehnung bezeichnet.

5. Notlaufreifen nach Anspruch 1 mit einer Wärmeleitfähigkeit von 0,3 bis 5 W/m·K.

6. Notlaufreifen nach Anspruch 1, wobei die Kautschukzusammensetzung ferner Ruß enthält.

7. Notlaufreifen nach Anspruch 1, wobei die Kautschukzusammensetzung desweiteren Silica enthält.

8. Notlaufreifen nach Anspruch 1, wobei die Kautschukzusammensetzung ferner ein Alkylphenol-Schwefelchlorid-Kondensat enthält.

9. Luftreifen umfassend:

   eine Seitenwand, welche durch Verwenden einer Kautschukzusammensetzung hergestellt worden ist, welche enthält:

einen Dienekautschuk sowie Carbonfasern auf Basis von Kohle-Pech,
wobei der Dienekautschuk Butadienekautschuk in einer Menge zwischen 10 und 80 Massen-% pro 100 Massen-% des Dienekautschuks enthält, und
wobei die Menge der Carbonfasern auf Basis von Kohle-Pech 1 bis 50 Massenteile pro 100 Massenteile des Dienekautschuks beträgt.

**Revendications**

1. Pneu roulant à plat comprenant
une couche de renforcement de paroi latérale qui est produite en utilisant une composition de caoutchouc comprenant un caoutchouc de diène et une fibre de carbone à base de brai de houille,
dans lequel le caoutchouc de diène contient un caoutchouc de butadiène dans une quantité de 10 à 80 % en masse pour 100 % en masse du caoutchouc de diène, et
dans lequel la quantité de la fibre de carbone à base de brai de houille est de 1 à 50 parties en masse pour 100 parties en masse du caoutchouc de diène.

2. Pneu roulant à plat selon la revendication 1, dans lequel le caoutchouc de diène contient du caoutchouc naturel et/ou du caoutchouc naturel époxydé dans une quantité de 10 à 80 % en masse pour 100 % en masse du caoutchouc de diène.

3. Pneu roulant à plat selon la revendication 1, dans lequel la fibre de carbone à base de brai de houille présente un diamètre moyen de fibre de 1 à 80 μm et une longueur moyenne de fibre de 0,1 à 30 mm.

4. Pneu roulant à plat selon la revendication 1, présentant
un module complexe E* de 5 MPa ou supérieur, et
1 une énergie de rupture (TB x EB/2) de 500 ou supérieure, TB faisant référence à la résistance à la traction à la rupture, et EB faisant référence à l'allongement à la rupture.

5. Pneu roulant à plat selon la revendication 1, présentant une conductivité thermique de 0,3 à 5 W/m.K.

6. Pneu roulant à plat selon la revendication 1, dans lequel la composition de caoutchouc comprend de plus du noir de carbone.

7. Pneu roulant à plat selon la revendication 1, dans lequel la composition de caoutchouc comprend de plus de la silice.

8. Pneu roulant à plat selon la revendication 1, dans lequel le composition de caoutchouc comprend de plus un condensat d'alkylphénolchlorure de soufre.

9. Pneumatique comprenant
une paroi latérale qui est produite en utilisant une composition de caoutchouc comprenant
un caoutchouc de diène et une fibre de carbone à base de brai de houille,
dans lequel le caoutchouc de diène contient un caoutchouc de butadiène dans une quantité de 10 à 80 % en masse pour 100 % en masse du caoutchouc de diène, et
dans lequel la quantité de la fibre de carbone à base de brai de houille est de 1 à 50 parties en masse pour 100 parties en masse du caoutchouc de diène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004330822 A
- JP 2004034743 A
- US 20030000619 A1
- WO 2006106609 A1
- WO 2004108859 A2
- JP H07331536 A